# EUROPEAN PATENT SPECIFICATION

(11) **EP 2 192 319 B1**
(45) Date of publication and mention of the grant of the patent: **15.02.2012**
(21) Application number: 08020800.2
(22) Date of filing: 01.12.2008
(51) Int. Cl.: F16D 48/06

(54) **Clutch system**
Kupplungssystem
Système d'embrayage

(43) Date of publication of application: 02.06.2010
(73) Proprietor: GM Global Technology Operations LLC, Detroit, MI 48265-3000 (US)
(72) Inventor: Kirchner Eckhard, 19452 Upplands Väsby (SE)
(74) Representative: Strauss, Peter

(56) References cited:
- EP-A- 1 342 930
- EP-A- 1 630 442
- EP-A- 1 679 450
- EP-A- 1 681 496
- DE-A1- 10 220 869
- DE-A1- 19 919 339
- DE-A1-102006 054 020
- FR-A- 2 886 421
- GB-A- 2 376 997
- US-A1- 2005 167 232

## Description

### Background of the invention

The present invention refers to the automotive technology, more specifically to the technology of drive systems for vehicles.

It is well known in the art to use motors, clutches and transmissions as a transmission chain for the torque driving the wheels of the vehicle. The transmission enables the driver of the vehicle to apply different gears by engagement of the gears with a shifting system. Changing the gear or launching the vehicle requires a clutch that allows for control of the torque transfer between the motor and the transmission.

Different constructions of clutches like single or dual clutches, mechanically operated or automatically actuated clutches are well known in the art.

Usually, a clutch is operated by a pedal that is provided with a linear spring element to generate a reactive force as a feedback for the driver and with an over centre spring element that makes operating of the clutch pedal more convenient. Operating of the clutch pedal can then be transferred by a rod or a cable or by a hydraulic pipe. For example, hydraulic clutch systems according to the state of the art often comprise a master piston ,a frequency modulator, a peak torque limiter and a slave piston that is applying force directly to the moving part of the clutch.

### Scope of the invention

One problem, that can occur after a certain operating time, i.e. after several months or years, is the mechanical wear of the clutch which leads to a change of the mechanical conditions of the clutch system. Usually the operating pedal has to be moved a longer way in order to reach the same clutch operation as before. At the same time, the feedback force response of the clutch is changing so that the operating of the clutch can become inconvenient for the driver.

Therefore a solution is known from prior art that inserts an edge shaped body into the operating chain of the clutch and this way readjusts the clutch system. This system provides for a separate sensor spring that helps to push the edge shaped element into the gap that results from the clutch wear.

The known system depends on a mechanically reliable working of the wear adjustment. Under operating conditions in a clutch system often dust intrudes into the clutch bell housing which prevents the wear adjustment mechanism from working reliably. In this case the driver will notice an inconvenient mode of operation of the clutch.

It is also known from DE 102 20 869 A1 and from EP 1 342 930 to provide an automatic clutch system with a compensation of mechanical wear.

It is one goal of the present invention to overcome the downsides of prior art and to create a more reliable, convenient adjustment of mechanical wear of a clutch. If the same operation characteristic can be reproduced in spite of the wear having occurred, the clutch does not only work in a convenient way but is also very reliable and minimizes distractions of the driver which might lead to dangerous traffic situations or customer dissatisfaction.

### Short description of the invention

The present invention provides for an advantageous solution for a clutch system where the position sensor sensing the position of the clutch operating element, especially a pedal or a manual, is connected to a clutch actuator unit wherein the clutch actuator unit comprises a clutch control unit connected to said sensor. The clutch control unit transfers an operating element position measured by the sensor into a travel path of a first part of the clutch. This first part of the clutch usually is a moveable clutch plate. The transfer is done according to a transfer characteristic that can be a curve electronically stored in an electronic device. The measured position of the operating element in this case is the input of the electronic device and the target value of the travel path of the first part of the clutch is the output of the device. The transfer characteristic is a pattern stored in the electronic device that reflects the relation between input and output.

Further, the invention comprises a kiss point detection unit that detects, when the first part of the clutch makes contact with the second part of the clutch in order to transfer torque.

Such a kiss point detection unit is generally known from prior art and can be build into the clutch system or the measured value of torque can also be derived from a CAN bus. The kiss point detection unit is connected with the clutch control unit and the clutch control unit changes the transfer characteristic when the kiss point has changed substantially.

The kiss point detection unit of the invention comprises a sensor that detects the travel path of the first part of the clutch and compares the travel path to respective values of the operating element position. There will be usually a linear relation between these two values until contact is made between the first clutch part and the second clutch part and the kiss point has been reached. From that point on, the curve will show a different slope and this way the kiss point can be detected.

If a predetermined change of the operating element position where the kissing point is reached has occurred, the transfer characteristic is changed. This change can be achieved electronically by changing the transfer characteristic. Either different transfer characteristics can be prestored electronically and every time the kissing point has changed as a consequence of wear, the next transfer characteristic in line can be selected or the transfer characteristic can be changed systematically. As the transfer characteristic is basically a prestored curve in an electrical storage element, the curve is changed e.g. by either adding a constant value to all the points on the curve or by multiplying every value on the curve with a constant predetermined value greater than 1.

In order not to change the transfer characteristic to often, the control unit can check, if the change of the kiss point exceeds a certain predetermined value and a change of the transfer characteristic is only realised, if a certain minimum change of the kissing point is exceeded.

Changing of the kiss point reflects a mechanical wear in the clutch system which means that the relation between the operating element position and the travel path of the first part of the clutch has changed. In order to prevent this, the transfer characteristic can be changed appropriately by adding a constant value to the output of the control unit.

The actuator unit may comprise a hydraulic actuator/slave piston that is directly driving the first clutch part. In this case the control unit transfers the operating element position into a hydraulic pressure that is acting on the slave piston.

The actuator unit may as well comprise a coil to which electrical current is applied and that is driving a magnetic piston wherein the piston is connected to the first clutch part. In this case the control unit is transferring the operating element position into an electric current that is feeding said magnetic coil.

In both cases, the actuator unit provides for a force that is acting on said first clutch part. Additionally, a spring mechanism can be provided that is acting against the actuator unit. The force of the spring mechanism is overcome by the force of the actuator unit and the travel path of the actuator unit is dependant on the force generated by the hydraulic pressure or the electric current.

A kiss point detection unit periodically or constantly during the operating time is registering the kissing point or the relation between the operating element position and the position of the kissing point, respectively. For example, when starting the engine of the vehicle, and using the clutch for the first time, the kissing point can be registered and the respective operating element position, where the kissing point is reached, can be detected.

### Brief description of the drawings

As a matter of example, the present invention is presented according to the following figures and explained in the description below:
- figure 1: schematically shows a clutch operating chain,
- figure 2: shows the position of the clutch in the drive mechanism of a vehicle schematically,
- figure 3: schematically shows another operating line of a clutch,
- figure 4: schematically shows the operating of a wear ad- justment system for a clutch system,
- figure 5: schematically shows the wear adjustment system for another clutch system,
- figure 6: shows a diagram of the travel path of a clutch part versus the position of the clutch operat- ing element,
- figure 7: shows a different characteristic of the same diagram of figure 6,
- figure 8: shows the feedback force to the clutch operat- ing element versus the operating element posi- tion,
- figure 9: shows the schematical view a transfer element,
- figure 10: shows the changing of the element of figure 9 as a consequence of wear,
- figure 11: shows a simple wear adjustment mechanism ap- plied to the mechanisms from figures 9 and 10,
- figure 12: shows a diagram of the operating process of the clutch system with automatic wear adjustment.

### Detailed description

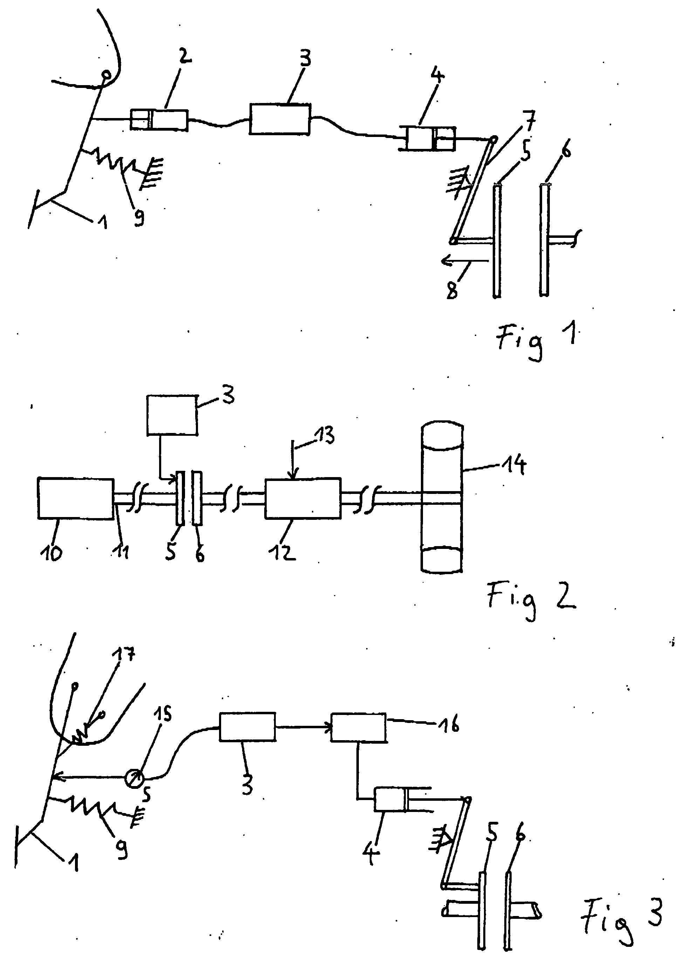

Figure 1 shows a clutch operating chain comprising a pedal 1 as a clutch operating element, a hydraulic main or master piston 2, a clutch actuator unit 3, a slave hydraulic piston 4 and the clutch plates 5, 6 wherein the clutch plate 5 forms the first, moveable part of the clutch.

The slave piston 4 acts on the lever 7 which moves the first part 5 of the clutch in the direction indicated by arrow 8, when the clutch pedal 1 is pressed down. The linear clutch spring 9 generates a feedback force for the driver when operating the clutch pedal 1.

The actuator unit 3 comprises a transfer element for example with a microcontroller that transfers the pressure generated in the main piston 2 to a pressure in the slave piston 4 in order to transfer clutch movement. The actuator unit 3 comprises for example pressure regulating valves and flow restrictors where necessary. The hydraulic pistons are connected to the actuator unit by hydraulic pipes.

The movement of the clutch in the opposite direction with respect to arrow 8 is generated by a clutch closing spring not shown in the figure. When the clutch is closed, clutch plates 5, 6 are in contact and pressed together in a way to allow for transferring torque.

Figure 2 schematically shows the position of the clutch plates 5, 6 in the drive line of a vehicle.

A motor 10 generates rotational movement that is transferred by an axle 11 to the first clutch plate 5. The clutch actuator unit 3 acts on the clutch plate 5 in order to bring the clutch into a position where it does or does not transfer torque. The second plate 6 of the clutch is connected to a transmission 12 that can be controlled as symbolized by arrow 13 in order to engage or disengage gears.

From the transmission 12 torque is transferred to the wheels, one of them 14 being shown in a cross sectional view.

Figure 3 shows a so called clutch-by-wire system where a pedal 1 with a linear spring 9 can be operated in order to operate the clutch and where the position of the operating element, i.e. the position of the clutch pedal is detected by the operating element position sensor 15. The position of the pedal 1 is sent to the actuator unit 3 and transferred to an output that is sent to a hydraulic pressure generating unit 16 generating pressure in the slave cylinder 4 in order to move the first clutch plate 5.

The actuator unit 3 may as well be connected to an electrical current generator that is generating a current in order to drive a magnetic coil/ piston system, where the piston is connected to the first clutch plate 5.

In figure 3 in addition to the linear spring 9 an over centre spring 17 is shown that in some phases of the movement of the pedal adds more or less feedback force to the force generated by the linear spring 9. The two springs 9, 17 together make the feedback force during pedal operation more convenient.

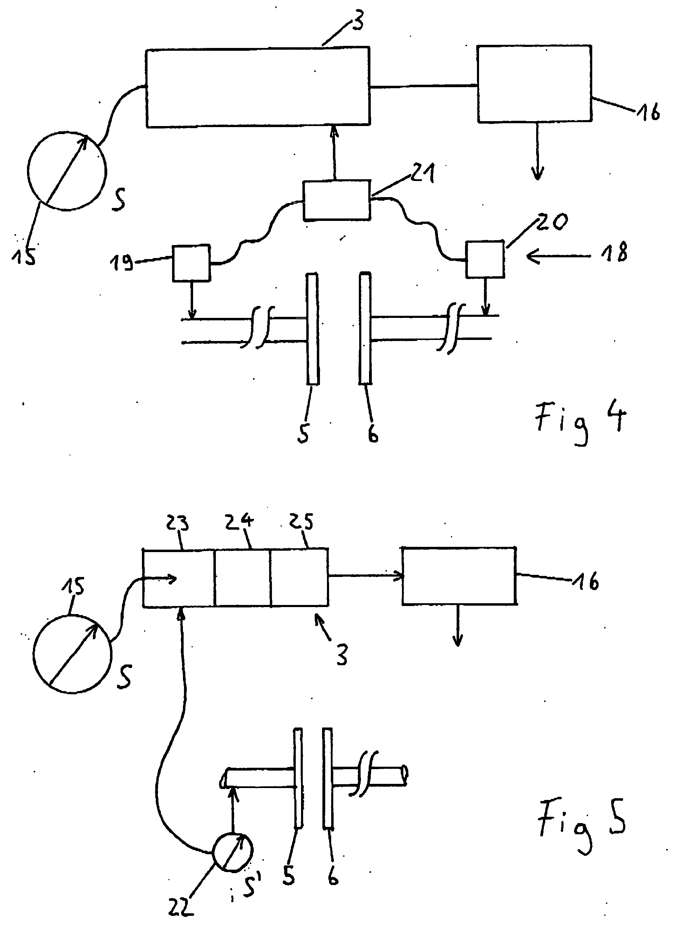

The wear adjustment mechanism will be explained in more detail with respect to figures 4 and 5. In figure 4 the operating element position sensor 15 is shown that is connected to the clutch actuator unit 3 and transfers the currently measured position to the actuator unit 3. At the same time, information about the kiss point is delivered by the kiss point detection unit 18. The kiss point detection unit 18 comprises e.g. two torque sensors 19, 20 on both sides of the clutch which detect the transferred torque on the axle. The torque values can be compared in the analysis unit 21 and so, the information, if the two clutch plates 5, 6 have reached the kiss point is detected and transferred to the clutch actuator unit 3. In the clutch actuator unit 3, the value of the operating element sensor position at which the kissing point has been reached is detected and analyzed. If this value changes from formerly measured values by a predetermined difference, the transfer characteristic of the clutch actuator unit 3 can be changed.

The clutch actuator unit 3 delivers hydraulic pressure values or electric current values to a pressure generating unit or a current generating unit 16 in order drive the first clutch part. The characteristic can be changed before the next use of the clutch system.

The kiss point detection unit 18 can either be active during every single operation of the clutch or it can be used periodically in predetermined time intervals or for example every time the vehicle is started during the first use of the clutch system.

Figure 5 shows another system for wear adjustment of a clutch system. The clutch actuator unit 3 receives signals from the operating element position sensor 15 that gives information about the clutch pedal position. Further, information from the first clutch part position sensor 22 is transferred to the clutch actuator unit 3 and is compared with the clutch pedal position in an analysis unit 23 in order to check if the relation between the two input values reflects a change as a consequence of clutch wear. If this is the case the transfer characteristic stored in an electronic storage element 24 is changed and either instantly or at least at the following operation of the clutch, a new transfer characteristic is selected or the old transfer characteristic is being changed in order to reach the kiss point of the clutch at the same position of the operating element (pedal) as before. Then the output of the clutch actuator unit 3 is produced in an output unit 25 and transferred to a pressure generator 16 or a respective current generator that feeds a drive of the first clutch part 5.

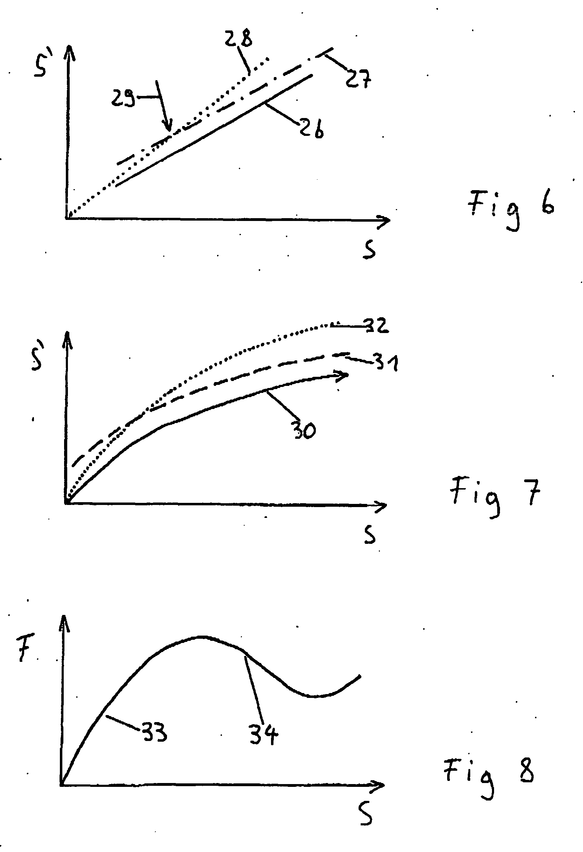

Figure 6 shows three curves wherein the first curve 26 shows the relation between s (operating element position) and s' (travel path of the first part of the clutch). The relation between these two values without wear is reflected by curve 26. The dotted line curve 27 reflects a changed transfer characteristic, where a constant value has been added to the initial curve 26 in order to adjust for wear.

The dotted curve 28 shows an alternative change of the characteristic, where the values of the initial curve 26 have been multiplied with a constant factor greater than one. The arrow 29 designates the kiss point of the clutch where both changed curves 27, 28 should meet. As a consequence, both changed transfer characteristics lead to reaching the kiss point of the clutch at the same position of the operating element (pedal).

Figure 7 shows a different kind of transfer characteristic in form of logarithmic curve 30. A first changed characteristic after wear is reflected by dashed line 31 (a constant value has been added to the curve 30) while a second, alternative changed characteristic is reflected by the dotted third curve 32 (multiplication by a fixed factor greater than 1).

Figure 8 shows the feedback force F that the driver senses when operating the clutch by the pedal on the vertical axis versus the position of the pedal on the horizontal axis. The first part 33 of the curve mainly reflects the action of the linear spring while the S-shape in the region 34 reflects the effect of the over centre spring in so far as the feedback force is reduced in that region.

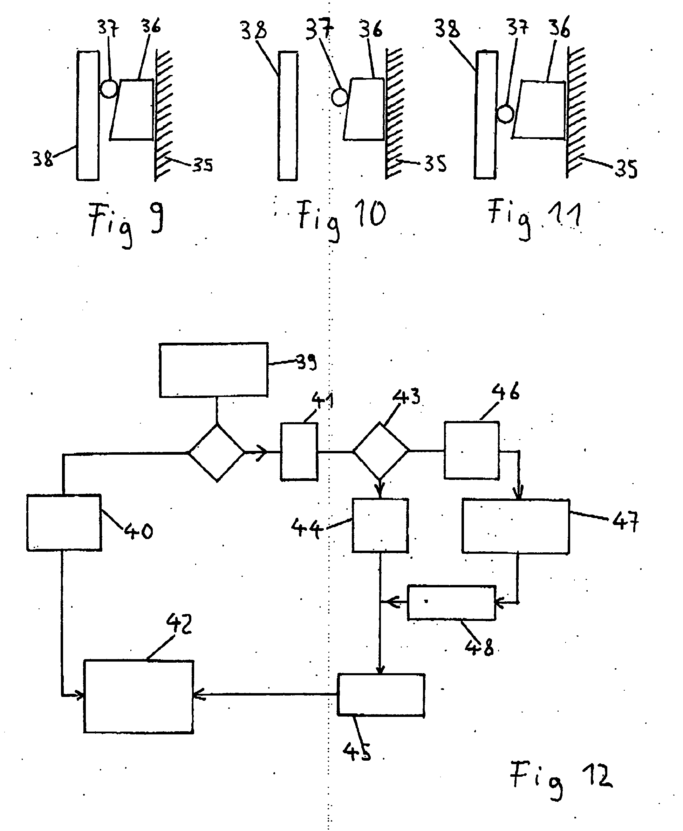

Figure 9 schematically shows a wear adjustment mechanism, where a moving clutch part is symbolized by reference number 35, a transfer member designated by 36 and a wear adjustment part by 37. The part with the reference number 38 stands for an operating element. Figure 9 shows the system without wear, with no space between the different elements in the operating chain.

Figure 10 shows the situation after a certain wear occurred when there is a space between the operating element 38 and the other elements of the chain.

Figure 11 shows how the wear is adjusted by moving the adjustment part 37 to a position where it adjusts the wear in order to reduce the space between the operating element 38 and the other elements of the operating chain.

Figures 9, 10 and 11 reflect a conventional method how clutch systems according to the prior art deal with wear adjustment. The system and systems alike often do not have the reliability required as a consequence of dust in the clutch housing caused by wear that generates friction and prevents the wear adjustment system from working properly.

The present invention does not depend on mechanical adjustment systems and thus is more reliable. In addition, as it is dealt with the wear electronically, respective information about the clutch system and its wear can easily be gained and transferred to an information system of the vehicle.

Figure 12 shows more in detail a flow chart of wear adjustment in the clutch system.

The first process step 39 symbolizes the start of the clutch operation with the initial pedal force characteristic. When starting the operation, alternative possibilities may occur:
In the first case no wear or little wear has occurred, symbolized by box No. 40. The alternative that medium or high wear has occurred is represented by box No. 41.

In the case no or little wear has occurred, the process uses the initial kiss point for the clutch actuation and uses the initial transfer characteristic for generating movement of the first part of the clutch. The operating of the clutch with the present transfer characteristic is symbolized by reference number 42.

In the alternative case 41 where clutch wear has occurred, the kiss point detection unit is activated in order to find out if and how much the kiss point has changed. This step is represented by number 43. In the case that torque response of the clutch is consistent with the currently used kiss point, represented by number 44, a command is given to use the current kiss point for clutch actuation. This step is symbolized by box No. 45.

In the case that substantial change of the kiss point has occurred, symbolized by box 46, the kiss point detection algorithm is executed, symbolized by reference number 47. This kiss point detection leads to a change of the transfer characteristic symbolized by step 48. After that the newly introduced transfer characteristic can be used and the operation 42 of the clutch can be continued.

The clutch system and its operation as described above according to the invention provide for a reliable adjustment of wear and an operation of the clutch that is convenient for the driver. A constant pedal force characteristic can be used for the clutch pedal so that the driver does not notice the wear adjustment. In addition, costly measures for mechanical adjustment of the wear can be avoided, the risk of failure of such mechanical systems does not occur.

### List of reference numbers

- 1: clutch pedal
- 2: main piston
- 3: clutch actuator unit
- 4: slave piston
- 5: first clutch plate
- 6: second clutch plate
- 7: lever
- 8: arrow
- 9: linear spring
- 10: motor
- 11: axle
- 12: transmission
- 13: arrow
- 14: wheel
- 15: operating element position sensor
- 16: pressure generator
- 17: over centre spring
- 18: kiss point detection unit
- 19, 20: torque sensors
- 21: analysis unit
- 22: first clutch part position sensor
- 23: analysis unit
- 24: storage element
- 25: output.unit
- 26, 27, 28: curves
- 29: arrow
- 30, 31, 32: curves
- 33: first part of a curve
- 34: second part of a curve
- 35: clutch part
- 36: transfer part
- 37: adjustment element
- 38: operating element
- 39-48: process steps, status alternatives

## Claims

1. A clutch system, comprising a clutch operating element, a clutch operating position sensor (15) and clutch actuator unit (3), wherein the clutch actuator unit comprises a clutch control unit which is connected to said sensor (15), wherein the clutch control unit transfers an operating element position measured by the sensor (15) into a travel path of a first part of the clutch according to a transfer characteristic, wherein the operating element position measured by the sensor (15) is an input of the clutch control unit and a target value of the travel path is an output of the clutch control unit, and wherein a kiss point detection unit (18) is provided that detects when the first part of the clutch makes contact with a second part of the clutch in order to transfer torque and wherein the kiss point detection unit (18) communicates with the clutch control unit and the clutch control unit changes the transfer characteristic when the kiss point on the travel path of the first part of the clutch has changed by a predetermined value, the clutch system being **characterised in that** the characteristic is changed by shifting the entire characteristic by adding a constant value to the output of the control unit or by multiplying the output of the control unit with a fixed factor greater than 1, and wherein the kiss point detection unit (18) comprises a sensor that measures the travel path of the first part of the clutch which is transferred to the clutch actuator unit (3) and is compared with the clutch pedal position in an analysis unit (23) in order to check if the relation between the two input values reflects a change as a consequence of clutch wear.

2. The clutch system according to claim 1,
wherein the control unit transfers an operating element position into a hydraulic pressure that is applied to a hydraulic piston (4) and wherein said hydraulic piston (4) is driving the first part of the clutch.

3. The clutch system according to claim 2,
wherein a spring mechanism is connected to the first clutch part in order to act against the hydraulic piston (4).

4. The clutch system according to any of the proceeding claims,
wherein the control unit transfers an operating element position into an electric current that is feeding an electric motor or an electromagnet driving a piston that is connected to said first part of the clutch.

5. The clutch system according to claim 4,
wherein a spring mechanism is connected to the first clutch part in order to act against the piston.

6. The clutch system according to any of the proceeding claims,
wherein the characteristic is changed when the position of the operating element corresponding to the kiss point has changed by a predetermined value.

7. The clutch system according to any of the proceeding claims,
wherein the characteristic is a linear curve.

8. The clutch system according to any of the proceeding claims,
wherein the characteristic is a logarithmic curve.

9. The clutch system according to any of the proceeding claims,
wherein the kiss point detection unit (18) comprises a torque sensor (19, 20) that measures the torque transferred by the clutch.

10. The clutch system according to any of the proceeding claims,
wherein the clutch operating element is a pedal and wherein the pedal (1) is connected to a first spring (9) and to an over centre spring (17).

## Patentansprüche

1. Kupplungssystem, umfassend ein Kupplungsbetätigungselement, einen Kupplungsbetätigungs-Positionssensor (15) und eine Kupplungsaktuatoreinheit (3), wobei die Kupplungsaktuatoreinheit eine Kupplungssteuerungseinheit umfasst, die mit dem Sensor (15) verbunden ist, wobei die Kupplungssteuerungseinheit eine von dem Sensor (15) gemessene Betätigungselementposition in einen Weg eines ersten Teils der Kupplung gemäß einer Übertragungscharakteristik überträgt, wobei die vom Sensor (15) gemessene Betätigungselementposition eine Eingabe der Kupplungssteuerungseinheit ist und ein Zielwert des Wegs eine Ausgabe der Kupplungssteuerungseinheit ist, und wobei eine Berührungspunktfeststellungseinheit (18) vorgesehen ist, die erfasst, wenn der erste Teil der Kupplung den Kontakt mit einem zweiten Teil der Kupplung aufnimmt, um das Drehmoment zu übertragen, und wobei die Berührungspunktfeststellungseinheit (18) mit der Kupplungssteuerungseinheit kommuniziert und die Kupplungssteuerungseinheit die Übertragungscharakteristik ändert, wenn sich der Berührungspunkt auf dem Weg des ersten Teils der Kupplung um einen festgelegten Wert geändert hat, wobei das Kupplungssystem **dadurch gekennzeichnet ist, dass** die Charakteristik **dadurch** geändert wird, dass die gesamte Charakteristik durch Hinzufügen eines konstanten Werts zur Ausgabe der Steuerungseinheit oder durch die Multiplikation der Ausgabe der Steuerungseinheit mit einem fixierten Faktor größer als 1 verschoben wird, und wobei die Berührungspunktfeststellungseinheit (18) einen Sensor umfasst, der den Weg des ersten Teils der Kupplung misst, der zur Kupplungsaktuatoreinheit (3) übertragen und in einer Analyseeinheit (23) mit der Kupplungspedalposition verglichen wird, um zu prüfen, ob das Verhältnis zwischen den zwei Eingangswerten eine Änderung infolge Kupplungsabnutzung anzeigt.

2. Kupplungssystem gemäß Anspruch 1, wobei die Steuerungseinheit eine Betätigungselementposition in einen hydraulischen Druck überträgt, der auf einen hydraulischen Kolben (4) übertragen wird, und wobei der hydraulische Kolben (4) den ersten Teil der Kupplung antreibt.

3. Kupplungssystem gemäß Anspruch 2, wobei ein Federmechanismus mit dem ersten Kupplungsteil verbunden ist, um gegen den hydraulischen Kolben (4) zu wirken.

4. Kupplungssystem gemäß einem der vorangehenden Ansprüche,
wobei die Steuerungseinheit eine Betätigungselementposition in einen elektrischen Strom überträgt, der einen Elektromotor oder einen Elektromagnet speist, welche einen Kolben antreiben, der mit dem ersten Teil der Kupplung verbunden ist.

5. Kupplungssystem gemäß Anspruch 4,
wobei ein Federmechanismus mit dem ersten Kupplungsteil verbunden ist, um gegen den Kolben zu wirken.

6. Kupplungssystem gemäß einem der vorangehenden Ansprüche,
wobei die Charakteristik geändert wird, wenn sich die Position des Betätigungselements in Entsprechung zum Berührungspunkt um einen bestimmten Wert geändert hat.

7. Kupplungssystem gemäß einem der vorangehenden Ansprüche,
wobei die Charakteristik eine lineare Kurve ist.

8. Kupplungssystem gemäß einem der vorangehenden Ansprüche,
wobei die Charakteristik eine logarithmische Kurve ist.

9. Kupplungssystem gemäß einem der vorangehenden Ansprüche,
wobei die Berührungspunktfeststellungseinheit (18) einen Drehmomentsensor (19, 20) umfasst, der das von der Kupplung übertragene Drehmoment misst.

10. Kupplungssystem gemäß einem der vorangehenden Ansprüche,
wobei das Kupplungsbetätigungselement ein Pedal ist und wobei das Pedal (1) mit einer ersten Feder (9) und einer Übertotpunktfeder (17) verbunden ist.

## Revendications

1. Système d'embrayage comprenant un élément de commande de l'embrayage, un capteur de position de fonctionnement de l'embrayage (15) et une unité d'actionnement de l'embrayage (3), dans lequel l'unité d'actionnement de l'embrayage comprend une unité de contrôle de l'embrayage qui est reliée audit capteur (15), laquelle unité de contrôle de l'embrayage convertit une position de l'élément de commande mesurée par le capteur (15) en un trajet de déplacement d'une première partie de l'embrayage selon une caractéristique de conversion, dans lequel la position de l'élément d'actionnement mesurée par le capteur (15) est une entrée de l'unité de contrôle de l'embrayage et une valeur visée du trajet de déplacement est une sortie de l'unité de contrôle de l'embrayage, et dans lequel une unité de détection du point de patinage (18) est prévue pour détecter que la première partie de l'embrayage vient en patinage avec une deuxième partie de l'embrayage afin de transmettre le couple et dans lequel l'unité de détection du point de patinage (18) communique avec l'unité de contrôle de l'embrayage et l'unité de contrôle de l'embrayage modifie la caractéristique de conversion quand le point de patinage sur le trajet de déplacement de la première partie de l'embrayage a changé d'une valeur prédéterminée, **caractérisé en ce que** la caractéristique est modifiée en déplaçant la caractéristique entière par l'ajout d'une valeur constante à la sortie de l'unité de contrôle ou par multiplication de la sortie de l'unité de contrôle par un facteur fixe supérieur à 1, l'unité de détection du point de patinage (18) comprenant un capteur qui mesure le trajet de déplacement de la première partie de l'embrayage qui est transmis à l'unité d'actionnement de l'embrayage (3) et comparé à la position de la pédale d'embrayage dans une unité d'analyse (23) afin de vérifier si la relation entre les deux valeurs d'entrée rend compte d'un changement résultant de l'usure de l'embrayage.

2. Système d'embrayage selon la revendication 1, dans lequel l'unité de contrôle convertit une position de l'élément d'actionnement en une pression hydraulique exercée sur un piston hydraulique (4) et dans lequel ledit piston hydraulique (4) entraîne la première partie de l'embrayage.

3. Système d'embrayage selon la revendication 2, dans lequel un mécanisme à ressort est relié à la première partie de l'embrayage pour agir contre le piston hydraulique (4).

4. Système d'embrayage selon l'une quelconque des revendications précédentes, dans lequel l'unité de contrôle convertit une position de l'élément d'actionnement en un courant électrique qui alimente un moteur électrique ou un électroaimant entraînant un piston relié à ladite première partie de l'embrayage.

5. Système d'embrayage selon la revendication 4, dans lequel un mécanisme à ressort est relié à la première partie de l'embrayage de façon à agir contre le piston.

6. Système d'embrayage selon l'une quelconque des revendications précédentes, dans lequel la caractéristique est modifiée quand la position de l'élément d'actionnement correspondant au point de patinage a changé d'une valeur prédéterminée.

7. Système d'embrayage selon l'une quelconque des revendications précédentes, dans lequel la caractéristique est une courbe linéaire.

8. Système d'embrayage selon l'une quelconque des revendications précédentes, dans lequel la caractéristique est une courbe logarithmique.

9. Système d'embrayage selon l'une quelconque des revendications précédentes, dans lequel l'unité de détection du point de patinage (18) comprend un capteur de couple (19, 20) qui mesure le couple transmis par l'embrayage.

10. Système d'embrayage selon l'une quelconque des revendications précédentes, dans lequel l'élément d'actionnement de l'embrayage est une pédale et dans lequel la pédale (1) est reliée à un premier ressort (9) et à un ressort de rappel de pédale (17).
